# EUROPÄISCHE PATENTSCHRIFT

(11) **EP 3 165 481 B1**
(45) Veröffentlichungstag und Bekanntmachung des Hinweises auf die Patenterteilung: **17.10.2018**
(21) Anmeldenummer: 15193548.3
(22) Anmeldetag: 06.11.2015
(51) Int. Cl.: B65G 47/14, H01R 43/26

(54) **VORRICHTUNG ZUM VEREINZELN UND FÖRDERN VON STÜCKGUT**
DEVICE FOR SEPARATING AND CONVEYING OF PIECE GOODS
DISPOSITIF DE SEPARATION ET DE TRANSPORT DE MARCHANDISE DE DETAIL

(43) Veröffentlichungstag der Anmeldung: 10.05.2017
(73) Patentinhaber: Schleuniger Holding AG, 3608 Thun (CH)
(72) Erfinder: BERTAGNO, Marco, 8804 Au (CH); GYSI, René, 6340 Baar (CH); JENKINS, Mark, 6315 Alosen (CH); STAUFFER, Thomas, 9545 Wängi (CH); HOSTETTLER, Franz, 1071 Chexbres (CH)
(74) Vertreter: Patentbüro Paul Rosenich AG

(56) Entgegenhaltungen:
- EP-A1- 2 731 207
- WO-A1-97/08787
- WO-A1-2011/158145
- JP-A- H0 423 731
- US-A- 2 657 812
- US-A- 4 653 964

## Beschreibung

Vorrichtung zum Vereinzeln und Fördern von Stückgut aus einem Schüttbehälter zu einer Ausgabeposition, gemäss dem Oberbegriff von Anspruch 1, sowie Vorrichtung zum Aufbringen von Kabeltüllen auf ein Kabel, gemäss dem Oberbegriff von Anspruch 9.

Derartige Behälter werden vielfach in Verbindung mit Vorrichtungen zum Aufbringen von Kabeltüllen auf ein Kabel verwendet, wobei eine Vielzahl von losen Kabeltüllen im Behälter bereitgestellt werden, um durch eine Fördereinrichtung vereinzelt und zu einer Montagestelle zur Montage der geförderten Kabeltüllen auf das Kabel befördert zu werden. Bekannt sind dafür beispielsweise Saugblasförderer, die jedoch relativ laut sind und vergleichsweise viel Energie für ihren Betrieb benötigen.

In der WO2011158145A1 ist eine andere Art von Förderer offenbart, die ein endloses, ringförmiges, in den Schüttbehälter ragendes Fördermittel mit an der Innenseite des genannten Ringes befestigten Aufnahmemitteln zur Aufnahme der Kabeltüllen umfasst. Bei derartigen Anlagen können die einzelnen Teile des Schüttgutes zwischen den bewegten Teilen einklemmt werden, was zur Beschädigung des Schüttgutes und/oder zur Beschädigung der Anlage führen kann.

Für den reinen Transport, ohne jedoch die insbesondere für die Tüllenbestückung erforderliche Vereinzelung und Übergabe an eine weitere Fördereinrichtung zu ermöglichen, beschreibt die EP023905A1 eine Vorrichtung zum Verteilen und Transportieren von Feststoffteilchen. Diese umfasst eine Fluidisierungskammer, in welche die Feststoffteilchen eingebracht und innerhalb der Fluidisierungskammer in einer vorbestimmten Richtung geleitet werden. Dabei kommt eine Coanda-Düse zur Anwendung, um die Feststoffteilchen mitzureissen.

WO9708787 offenbart eine Vorrichtung nach dem Oberbegriff des Anspruchs 1. Die Aufgabe der vorliegenden Erfindung war daher eine Vorrichtung zum Vereinzeln und Fördern von Stückgut aus einem Schüttgutbehälter, mit welcher ein störungsfreier und leiser Betrieb mit energieeffizienter Förderung und Vereinzelung des Schüttgutes möglich ist. Die gleiche Aufgabenstellung soll für eine Vorrichtung zum Aufbringen von Kabeltüllen auf ein Kabel gelöst werden.

Diese Aufgaben werden gelöst durch die Merkmale der unabhängigen Ansprüche 1 bzw. 9. Weitere Merkmale sind in den Unteransprüchen und auch der Beschreibung sowie den beigefügten Zeichnungen enthalten.

Erfindungsgemäss ist die Vorrichtung zum Vereinzeln und Fördern von Stückgut aus einem Schüttbehälter gekennzeichnet durch eine das Stückgut ansaugende Unterdruckdüse zur Erzeugung eines das Stückgut fördernden Fluidstroms, wobei im Bereich der Ausgabeposition im Fluidstrom ein fluiddurchlässiges Auffangblech für das Stückgut angeordnet ist, und wobei eine Fluidpassage von einer Position stromabwärts des Auffangbleches bis in den Bereich nahe des Einganges der Unterdruckdüse führt. Mit einem derartigen System lässt sich kleines bis mittelgrosses Stückgut wie beispielsweise Kabeltüllen ohne mechanische Belastung und ohne Gefahr von Einklemmen fördern. Der Luft- und Energieverbrauch ist geringer als bei bekannten Ausführungen und kann zeitlich genau gesteuert werden.

Bevorzugt ist die Unterdruckdüse nach dem Coanda-Prinzip, als Venturidüse oder als Vortexdüse ausgeführt.

Eine weitere erfindungsgemässe Ausführungsform sieht vor, dass die Unterdruckdüse nahe dem Boden des Schüttbehälters angeordnet und deren Längsachse im Wesentlichen vertikal nach oben hin ausgerichtet ist.

Um die Übergabe der aus dem Schüttbehälter geförderten und vereinzelten Teile an eine Vorrichtung für den Weitertransport zu vereinfachen, können vorzugsweise die Ausgabeposition, das Auffangblech und eine Einströmöffnung der Fluidpassage im obersten Bereich der Vorrichtung angeordnet sein.

Wenn gemäss einer weiteren Variante dieser Ausführungsform zumindest das Auffangblech und die Einströmöffnung der Fluidpassage, vorzugsweise auch die Ausgabeposition für das vereinzelte Stückgut, aus vertikaler Richtung gesehen gegenüber der Ausströmöffnung der Unterdruckdüse versetzt angeordnet sind, kann das Zurückfallen geförderter Teile des Schüttgutes in die Düse verhindert und damit die Störungsanfälligkeit weiter vermindert werden.

Eine weitere vorteilhafte Variante der Erfindung ist dadurch gekennzeichnet, dass zumindest eine Ausströmöffnung für die Fluidpassage nahe der Ansaugöffnung der Unterdruckdüse und horizontal unterhalb davon liegt, wobei der Durchmesser jeder Ausströmöffnung bevorzugt kleiner ist als die kleinste Dimension des Stückgutes. Damit können, insbesondere bei Beginn der Förderung des Schüttgutes, dessen Auflockerung erleichtert und eine Bewegung in Richtung auf die Düse hin bewirkt werden. Durch die Dimensionierung wird der Eintritt von Teilen des Stückgutes in die Ausströmöffnung verhindert.

Alternativ dazu kann erfindungsgemäss auch zumindest eine begrenzte Gruppe von Ausströmöffnungen für die Fluidpassage nahe der Ansaugöffnung der Unterdruckdüse und horizontal unterhalb davon liegen.

Gemäss einer weiteren erfindungsgemässen Ausführungsform ist entfernt von der Unterdruckdüse und im Wesentlichen in gleicher Höhe damit eine Blasdüse mit vorzugsweise veränderbarer Ausströmrichtung vorhanden. Damit kann ein das Stückgut in Richtung auf den Eingang der Unterdruckdüse gerichteter und/oder das Stückgut im unteren Bereich der Vorrichtung als auch des Schüttbehälters auflockernder Luftstrom erzeugt werden. Speziell bei niedrigem Füllstand kann damit die Ansaugung des Stückgutes unterstützt werden.

Die Vorrichtung wie oben erläutert kann vorteilhafterweise bei einer Vorrichtung zum Aufbringen von Kabeltüllen auf ein Kabel verwendet werden. Vorgesehen sind dabei ein Schüttbehälter zur Aufnahme einer Vielzahl von losen Kabeltüllen und eine wie in den vorhergehenden Absätzen beschriebene Vorrichtung zum Vereinzeln der im Schüttbehälter befindlichen Kabeltüllen und zum Fördern der vereinzelten Kabeltüllen zu einer Montagestelle und eine Montageeinrichtung zur Montage der geförderten Kabeltüllen auf das Kabel.

Nachfolgend soll die Erfindung anhand der beigefügten Zeichnungen näher erläutert werden.

Dabei zeigt die
Fig.1 eine perspektivische Ansicht einer Anordnung mit Schüttgutbehälter für Kabeltüllen, und einer erfindungsgemässen Vorrichtung zur Förderung, Vereinzelung und Weitertransport der Kabeltüllen,
Fig. 2 eine perspektivische Ansicht einer erfindungsgemässen Anordnung für die gleiche Anwendung,
Fig. 3 eine perspektivische Ansicht der Vorrichtung der Fig. 2 zum Vereinzeln und Fördern des im Schüttbehälter befindlichen Stückgutes,
Fig. 4 einen Schnitt durch die Vorrichtung der Fig. 3 in Höhe der Mittelebene der Unterdruckdüse, und
Fig. 5 eine Vorderansicht der Vorrichtung der Fig. 3 und Fig. 4.

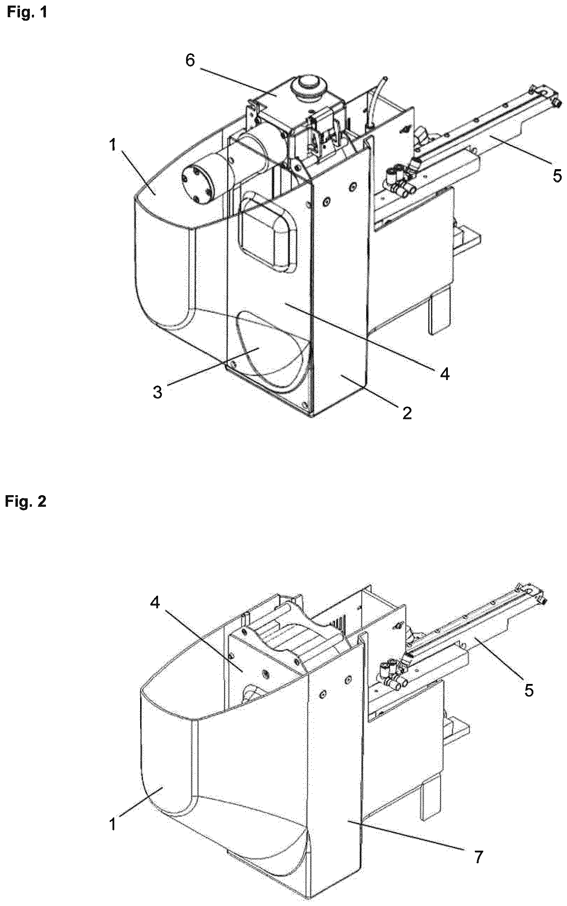

In Fig. 1 dargestellte Vorrichtung ist Teil einer Maschine zum Aufbringen von Kabeltüllen auf ein Kabel. Die Kabeltüllen sind in loser Schüttung in einem Schüttbehälter 1 aufgenommen. Eine Fördereinrichtung 2 nimmt über eine Öffnung 3 im unteren Teil einer Trennwand 4 Kabeltüllen auf und transportiert diese in vertikaler Richtung nach oben zu einer Übergabeposition im oberen Bereich der Fördereinrichtung 2 an eine Vorrichtung 5 zum Weitertransport zu einer Montagestelle für die Kabeltüllen auf ein Kabel. Die Fördereinrichtung 2 weist ein endloses, ringförmiges, in den Schüttbehälter 1 ragendes Fördermittel auf, das über einen Antrieb 6 ausserhalb, vorzugsweise oberhalb, der Fördereinrichtung 2 angetrieben ist.

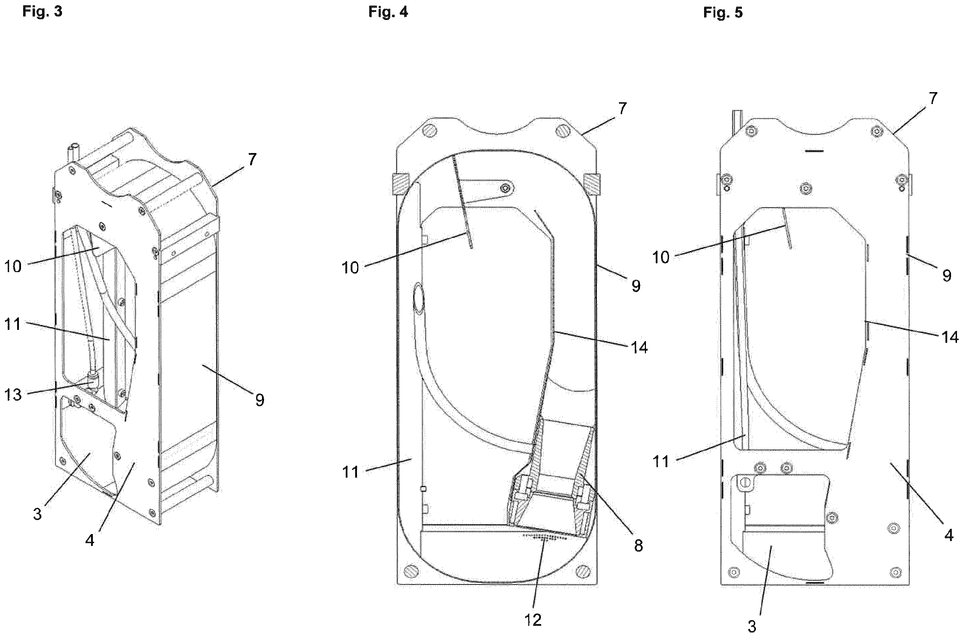

Eine erfindungsgemässe Vorrichtung 7 zum Vereinzeln und Fördern von Stückgut aus einem Schüttbehälter zu einer Ausgabeposition kann in gleichartiger Weise wie die Fördereinrichtung 2 in einer Maschine zum Aufbringen von Kabeltüllen auf ein Kabel eingesetzt werden, wie in Fig. 2 dargestellt ist. Durch das Fehlen von angetriebenen beweglichen Fördermitteln können Antriebe 6 und dgl. an der Vorrichtung 7 vermieden werden, womit auch eine kompaktere Bauweise ermöglicht ist. Das zu fördernde Stückgut kann in gleicher Weise wie oben beschrieben durch eine Öffnung 3 in einer Trennwand 4 aus dem Schüttgutbehälter 1 in den Bereich der Vorrichtung 7 eintreten (siehe Fig. 3).

Erfindungsgemäss weist die Vorrichtung 7 eine das Stückgut ansaugende Unterdruckdüse 8 auf. Diese ist vorzugsweise nach dem Coanda-Prinzip ausgeführt sein, aber auch als Venturidüse oder als Vortexdüse. Die Unterdruckdüse 8 ist vorzugsweise nahe dem Boden des Schüttbehälters 1 angeordnet bzw. im Wesentlichen knapp oberhalb des Bodenniveaus davon positioniert. Bei Verwendung einer Coanda-Düse, mit Wandanhaftung einer Flüssigkeit bzw. eines Gasstrahls bei hoher Geschwindigkeit, um eine Fluidbewegung in deren Umgebung zu erzeugen, wird eine kleine Menge Druckluft, die über eine Leitung von ausserhalb der Vorrichtung 7 zugeführt wird, bei Überschallgeschwindigkeit durch einen inneren Düsenring gepresst. Dadurch bildet sich ein Vakuum, das große Mengen der umgebenden oder "freien" Luft zusammen mit dem Stückgut durch die Düse 8 zieht. Dieses Prinzip hat den zusätzlichen Vorteil, dass bei Blockierung des Luftstroms die Strömung einfach umgekehrt wird, d.h. es entsteht ein nur geringer Rückstaudruck.

Da sich die Ausgabe- bzw. Übergabeposition typischerweise im obersten Bereich der Vorrichtung 7 befindet, ist die Längsachse der Unterdruckdüse 8, welche auch die Richtung des Luftstroms definiert, der das Stückgut zur Ausgabeposition fördert, im Wesentlichen vertikal und auf den oberen Rand des Schüttbehälters ausgerichtet. Sie kann - wie in Fig. 4 zu erkennen ist - leicht gegen die Senkrechte geneigt sein, wobei die Längsachse dann vorzugsweise nach aussen weist, um einen an der Wand 9 der Vorrichtung 7 anliegend nach oben strömenden Luftstrom zu erzeugen.

Im Bereich der Ausgabeposition im das Stückgut ist im fördernden Fluidstrom ein fluiddurchlässiges Auffangblech 10 für das Stückgut angeordnet, an welchem dieses aufprallt und nach der damit einhergehenden Abbremsung senkrecht nach unten fällt. Nahe dem unteren Bereich des Auffangbleches 10 ragt die Vorrichtung 5 für den Weitertransport der Kabeltüllen in die Vorrichtung 7 hinein und übernimmt die herunterfallenden Teile des Stückgutes. Das Auffangblech 10 kann als Trichterblech mit feinem Lochmuster oder auch als feines Drahtnetz ausgeführt sein.

Von diesem obersten Bereich der Vorrichtung 7, in welchem sich das Auffangblech 10 und die Abgabeposition der Kabeltüllen befindet, geht weiters eine Fluidpassage 11 von einer Position stromabwärts des Auffangbleches 10 aus. Diese Fluidpassage 11 führt der Wand der Vorrichtung 7 entlang hinunter bis in eine Höhe in Bodenniveau der Vorrichtung 7 bzw. des Schüttgutbehälters 1. Vorzugsweise führt die Passage 11 weiter bis zu einem Bereich nahe des Einganges der Unterdruckdüse 8. Ein Teil des zirkulierenden Luftstroms wird durch diese Passage 11 geführt und verbessert durch Zuführung von durch die Düse 8 ansaugbarer Luft die Förderleistung der Vorrichtung 7, insbesondere wenn der Füllstand der Kabeltüllen die Ansaugöffnung der Unterdruckdüse 8 übersteigt.

Für eine Vereinfachung des Weitertransportes des Stückgutes sind die Ausgabeposition, das Auffangblech 10 und eine Einströmöffnung der Fluidpassage 11 nicht nur vorzugweise im obersten Bereich der Vorrichtung 7 angeordnet, sondern sind auch aus vertikaler Richtung gesehen gegenüber der nach oben gerichteten Ausströmöffnung der Unterdruckdüse 8 versetzt angeordnet.

Zumindest eine Ausströmöffnung 12 für die Fluidpassage 11 ist nahe der Ansaugöffnung der Unterdruckdüse 8 und horizontal unterhalb davon angeordnet, wie in Fig. 4 dargestellt ist. Bevorzugt ist der Durchmesser jeder Ausströmöffnung 12 kleiner ist als die kleinste Dimension des Stückgutes. Alternativ dazu kann auch zumindest eine begrenzte Gruppe von Ausströmöffnungen 12 für die Fluidpassage 11 nahe der Ansaugöffnung der Unterdruckdüse 8 und horizontal unterhalb davon liegen.

Durch die Unterdruckdüse 8, vorzugsweise in Zusammenwirken mit der oder den Ausströmöffnungen 12, ergibt sich eine Zirkulation der das Stückgut fördernden Luft innerhalb der Vorrichtung 7. Dabei wird die Luft mit dem Stückgut aus einem Niveau unterhalb der Einströmöffnung der Unterdruckdüse 8 angesaugt, durch diese Düse 8 nach oben hin beschleunigt und in den oberen Bereich der Vorrichtung 7 geblasen. Dort erfolgt die Umlenkung mit gleichzeitiger Übergabe des Stückgutes an die Vorrichtung 5 zum Weitertransport , und die weitere Strömung der Luft auf der der Düse 8 gegenüberliegenden Seite der Vorrichtung, insbesondere durch die Passage 11, wieder in den unteren Bereich der Vorrichtung.

Schliesslich kann auch eine zusätzliche Blasdüse 13 vorhanden sein und Luft in das Stückgut im unteren Bereich der Vorrichtung 7 einblasen. Die Blasdüse 13 wird über eine Leitung von der Aussenseite der Vorrichtung 7 mit Druckluft versorgt. Damit können die Kabeltüllen auf die Öffnung der Unterdruckdüse 8 hin geblasen werden bzw. kann das aus dem Schüttgutbehälter 1 in den unteren Bereich der Vorrichtung 7 gelangte Stückgut damit aufgelockert werden. Vorzugsweise ist die Richtung der Blasdüse 13 verstellbar, typischerweise ist sie nach unten hin ausgerichtet.

Zur Führung und Verbesserung des von der Unterdruckdüse 8 nach oben hin gerichteten Luftstroms mit dem vereinzelten und geförderten Stückgut kann sich oberhalb der Unterdruckdüse 8 und parallel zur Wand 9 ein Leitblech 14 oder ein Kamin anschliessen. Dieses Leitblech 14 ist im oberen Bereich der Vorrichtung 7 derart schräg angeordnet, dass sich eine nach oben hin erweiternde Passage ergibt. Ein allfälliger Kamin weist in gleicher Weise eine sich nach oben hin erweiternde Öffnung im oberen Bereich der Vorrichtung 7 auf.

**Liste der Bezugszeichen**

| | |
|---|---|
| Schüttbehälter | 1 |
| Fördereinrichtung | 2 |
| Öffnung | 3 |
| Trennwand | 4 |
| Transportvorrichtung | 5 |
| Antrieb | 6 |
| Vorrichtung | 7 |
| Unterdruckdüse | 8 |
| Wand | 9 |
| Auffangblech | 10 |
| Fluidpassage | 11 |
| Ausströmöffnung(en) | 12 |
| Blasdüse | 13 |

## Patentansprüche

1. Vorrichtung (7) zum Vereinzeln und Fördern von Stückgut aus einem Schüttbehälter (1) zu einer Ausgabeposition, mit einer das Stückgut ansaugenden Unterdruckdüse (8) mit einer Ausströmöffnung (12) zur Erzeugung eines das Stückgut fördernden Fluidstroms, wobei im Bereich der Ausgabeposition im Fluidstrom ein fluiddurchlässiges Auffangblech (10) für das Stückgut angeordnet ist, **dadurch gekennzeichnet, dass** eine Fluidpassage (11) von einer Position stromabwärts des Auffangbleches (10) bis in den Bereich nahe des Einganges der Unterdruckdüse (8) führt und, dass das fluiddurchlässige Auffangblech (10) im fördernden Fluidstrom an der Ausströmöffnung für das Stückgut derart angeordnet ist, dass das Stückgut an diesem aufprallt und nach der damit einhergehenden Abbremsung senkrecht nach unten fällt.

2. Schüttbehälter nach Anspruch 1, **dadurch gekennzeichnet, dass** die Unterdruckdüse (8) nach dem Coanda-Prinzip, als Venturidüse oder als Vortexdüse ausgeführt ist.

3. Vorrichtung nach Anspruch 1 oder 2, **dadurch gekennzeichnet, dass** die Unterdruckdüse (8) nahe dem Boden der Fördereinrichtung (7) angeordnet und deren Längsachse im Wesentlichen vertikal nach oben hin ausgerichtet ist.

4. Vorrichtung nach einem der Ansprüche 1 bis 3, **dadurch gekennzeichnet, dass** die Ausgabeposition, das Auffangblech (10) und eine Einströmöffnung der Fluidpassage (11) im obersten Bereich der Fördereinrichtung (7) angeordnet sind.

5. Vorrichtung nach Anspruch 4, **dadurch gekennzeichnet, dass** zumindest das Auffangblech (10) und die Einströmöffnung der Fluidpassage (11), vorzugsweise auch die Ausgabeposition für das vereinzelte Stückgut, aus vertikaler Richtung gesehen gegenüber der Ausströmöffnung der Unterdruckdüse (8) versetzt angeordnet sind.

6. Vorrichtung nach einem der Ansprüche 1 bis 5, **dadurch gekennzeichnet, dass** zumindest eine Ausströmöffnung (12) für die Fluidpassage (11) nahe der Ansaugöffnung der Unterdruckdüse (8) und horizontal unterhalb davon liegt, wobei der Durchmesser jeder Ausströmöffnung (12) bevorzugt kleiner ist als die kleinste Dimension des Stückgutes.

7. Vorrichtung nach Anspruch 6, **dadurch gekennzeichnet, dass** zumindest eine begrenzte Gruppe von Ausströmöffnungen (12) für die Fluidpassage nahe der Ansaugöffnung der Unterdruckdüse (8) und horizontal unterhalb davon liegt.

8. Vorrichtung nach einem der Ansprüche 1 bis 7, **dadurch gekennzeichnet, dass** entfernt von der Unterdruckdüse (8) und im Wesentlichen in gleicher Höhe damit, vorzugsweise auf der gegenüberliegenden Seite der Fördereinrichtung (7), eine Blasdüse (13) mit vorzugsweise veränderbarer Ausströmrichtung vorhanden ist.

9. Vorrichtung zum Aufbringen von Kabeltüllen auf ein Kabel, umfassend einen Schüttbehälter (1) zur Aufnahme einer Vielzahl von losen Kabeltüllen, eine Fördereinrichtung (7) zum Vereinzeln der im Schüttbehälter befindlichen Kabeltüllen und zum Fördern der vereinzelten Kabeltüllen zu einer Montagestelle und eine Montageeinrichtung zur Montage der geförderten Kabeltüllen auf das Kabel, **gekennzeichnet durch** eine Fördereinrichtung (7) gemäss einem der Ansprüche 1 bis 8.

## Claims

1. Device (7) for separating and conveying piece items from a bulk container (1) to a discharge position, with a suction nozzle (8) that aspirates the piece items, with an outflow opening (12) for generating a fluid stream that conveys the piece items, wherein a fluid-permeable catch tray (10) is arranged in the region of the output position in the fluid stream, **characterized in that** a fluid passage (11) leads from a position downstream of the catch tray (10) to the region close to the intake of the suction nozzle (8) and that the fluid-permeable catch tray (10) is arranged in the conveying stream at the outflow opening for the piece items in such manner that the piece items strike said tray and fall vertically downwards following the deceleration entailed thereby.

2. Bulk container according to Claim 1, **characterized in that** the suction nozzle (8) is designed according to the Coanda principle, as a Venturi nozzle or as a vortex nozzle.

3. Device according to Claim 1 or 2, **characterized in that** the suction nozzle (8) is arranged close to the bottom of the conveyor device (7), and the longitudinal axis thereof is aligned substantially vertically upwards.

4. Device according to any one of Claims 1 to 3, **characterized in that** the output position, the catch tray (10) and an suction port of the fluid passage (11) are arranged in the uppermost region of the conveyor device (7).

5. Device according to Claim 4, **characterized in that** at least the catch tray (10) and the suction port of the fluid passage (11), preferably also the discharge position for the separated piece items, are arranged with an offset relative to the outflow opening of the suction nozzle (8) when viewed vertically.

6. Device according to any one of Claims 1 to 5, **characterized in that** at least one outflow opening (12) for the fluid passage (11) is located close to the suction port of the suction nozzle (8) and lies horizontally beneath it, wherein the diameter of each outflow opening (12) is preferably smaller than the smallest dimension of the piece items.

7. Device according to Claim 6, **characterized in that** at least a limited group of outflow openings (12) for the fluid passage is located close to the suction port of the suction nozzle (8) and lies horizontally beneath it.

8. Device according to any one of Claims 1 to 7, **characterized in that** a blower nozzle (13) with preferably variable outflow direction is present at a distance from and substantially level with the suction nozzle (8), preferably on the opposite side of the conveyor device (7).

9. Device attaching cable grommets to a cable, comprising a bulk container (1) for holding a multiplicity of loose cable grommets, a conveyor device (7) for separating the cable grommets located in the hopper and for conveying the separated cable grommets to an assembly location and an assembly apparatus for assembling the transported cable grommets on the cable, **characterized by** a conveyor device (7) according to any one of Claims 1 to 8.

## Revendications

1. Dispositif (7) pour séparer et transporter des produits en vrac à partir d'un bac de déversement (1) vers une position de sortie avec une buse à dépression (8) aspirant les produits en vrac avec une orifice d'évacuation (12) pour produire un courant de fluide transportant les produits en vrac, une tôle collectrice (10) perméable au fluide pour les produits en vrac étant disposée dans la zone de la position de sortie dans le courant de fluide, **caractérisé en ce qu'**un passage de fluide (11) mène d'une position en aval de la tôle collectrice (10) jusque dans la zone proche de l'entrée de la buse à dépression (8) et **en ce que** la tôle collectrice (10) perméable au fluide est disposée dans le courant de fluide transporteur sur l'orifice d'évacuation pour les produits en vrac de telle sorte que les produits en vrac viennent heurter celle-ci et tombent perpendiculairement vers le bas après le freinage se produisant de ce fait.

2. Bac de déversement selon la revendication 1, **caractérisé en ce que** la buse à dépression (8) est exécutée selon le principe de Coanda sous la forme de tube venturi ou buse à tourbillon.

3. Dispositif selon la revendication 1 ou 2, **caractérisé en ce que** la buse à dépression (8) est disposée proche du fond du dispositif de transport (7) et l'axe longitudinal de celui-ci est orienté pour l'essentiel verticalement vers le haut.

4. Dispositif selon l'une quelconque des revendications 1 à 3, **caractérisé en ce que** la position de sortie, la tôle collectrice (10) et une ouverture d'entrée du passage de fluide (11) sont disposées dans la zone supérieure du dispositif de transport (7).

5. Dispositif selon la revendication 4, **caractérisé en ce qu'**au moins la tôle collectrice (10) et l'ouverture d'entrée du passage de fluide (11), de préférence également la position de sortie pour les produits en vrac séparés, sont disposées décalées, vues de la direction verticale, par rapport à l'orifice d'évacuation de la buse à dépression (8).

6. Dispositif selon l'une quelconque des revendications 1 à 5, **caractérisé en ce qu'**au moins une orifice d'évacuation (12) pour le passage de fluide (11) est située près de l'ouverture d'aspiration de la buse à dépression (8) et horizontalement en dessous de celle-ci, le diamètre de chaque orifice d'évacuation (12) étant de préférence plus petit que la plus petite dimension des produits en vrac.

7. Dispositif selon la revendication 6, **caractérisé en ce qu'**au moins un groupe limité d'ouverture d'écoulement (12) pour le passage de fluide est situé près de l'ouverture d'aspiration de la buse à dépression (8) et horizontalement en dessous de celle-ci.

8. Dispositif selon l'une quelconque des revendications 1 à 7, **caractérisé en ce qu'**une buse soufflante (13) avec dispositif d'écoulement de préférence modifiable est présente éloignée de la buse à dépression (8) et pour l'essentiel à la même hauteur que celle-ci, de préférence sur le côté opposé du dispositif de transport (7) .

9. Dispositif destiné à la mise en place de passe-câbles sur un câble, comprenant un bac de déversement (1) pour recevoir une pluralité de passe-câbles en vrac, un dispositif de transport (7) pour séparer les passe-câbles se trouvant dans le bac de déversement et pour le transport des passe-câbles séparés vers un poste de montage et un dispositif de montage pour le montage des passe-câbles transportés sur le câble, **caractérisé par** un dispositif de transport (7) selon l'une quelconque des revendications 1 à 8.
